# EUROPÄISCHE PATENTSCHRIFT

(11) **EP 3 689 186 B1**
(45) Veröffentlichungstag und Bekanntmachung des Hinweises auf die Patenterteilung: **22.06.2022**
(21) Anmeldenummer: 20152223.2
(22) Anmeldetag: 16.01.2020
(51) Int. Cl.: A47B 91/00, B60B 33/00

(54) **ROLLE FÜR APPARATE, MÖBEL, MIT EINEM EIN KOPFTEIL UND EIN FUSSTEIL AUFWEISENDES TRAGTEIL**
ROLLER FOR APPARATUSES, FURNITURE COMPRISING A SUPPORT PART COMPRISING A HEAD PART AND A FOOT PART
ROULEAU POUR APPAREILS, MEUBLE, DOTÉ D'UNE PARTIE PORTEUSE COMPORTANT UNE PARTIE DE TÊTE ET UNE PARTIE DE PIED

(30) Priorität: 29.01.2019 DE 102019102175
(43) Veröffentlichungstag der Anmeldung: 05.08.2020
(73) Patentinhaber: Steinco Paul vom Stein GmbH, 42929 Wermelskirchen (DE)
(72) Erfinder: Rödel, Thorsten, 42929 Wermelskirchen (DE)
(74) Vertreter: Ostriga Sonnet Wirths & Vorwerk

(56) Entgegenhaltungen:
- GB-A- 2 561 032
- US-A- 5 123 143
- US-A- 6 125 504

## Beschreibung

Die Erfindung betrifft eine Rolle für Apparate und Möbel, mit einem ein Kopfteil und ein Fußteil aufweisendes Tragteil, dessen Kopfteil einen Befestigungsbolzen aufnimmt und dessen Fußteil eine Radachse lagert, an der mindestens ein Rad angeordnet ist und dass anliegend am Tragteil weitgehend umlaufend eine einstückige, eine durchgehende Designfläche ausbildende Tragteilabdeckung aus Kunststoff austauschbar angeordnet ist.

Eine derartige Rolle ist aus der D1 GB 2561032 A mit einer darüber gestülpten separaten Schutzhülle bekannt, die beabstandet vom Tragteil nahezu die gesamte Rolle, einschließlich des Rades umgibt und die offensichtlich das Eindringen von Mikroben, Schmutz und anderen schädlichen Partikeln in die Rolle vermeiden soll. Auch scheint diese Rolle eine gewisse Schutzfunktion für insbesondere die Füße des Menschen bei Bewegung des mit Rollen versehenen Gegenstandes zu haben.

Des Weiteren ist aus der D2 US 2,483,241 A ebenfalls eine derartige Rolle offenbart, bei der eine offensichtlich flexible biegsame Schutzabdeckung von oben über den Bolzen und die Rolle gestülpt wird und diese Schutzhülle weitgehend auch das Rad abdeckt. Auch diese hat zum Ziel, während des Betriebs die Rolle und Gegenstände mit denen die Rolle kollidiert, zu schützen.

Letztlich offenbart auch die D3 US 6 125 504 A einen Bürostuhl-Rollenschutz, welcher mit großem Abstand über eine oder mehrere Stuhlrollen gestülpt wird und welcher - den Schutz der Schuhe der sitzenden Person oder der umgebenden Möbel dient. Auch diese Schutzhülle hat einen großen Abstand zu den eigentlichen Rollen.

Zwar haben diese Rollen nach dem Stand der Technik den Vorteil, dass sie auch mit Schutzhüllen, die unterschiedliches Design aufweisen, umhüllt werden können, jedoch ist eine derartige Lösung sehr aufwändig und designtechnisch nachteilig.

Zugleich steigt die Nachfrage der Kunden nach individueller Ausgestaltung der Rollen bei gleichzeitig sinkenden Stückzahlen der einzelnen Rollen und die Kosten für die Herstellung der Vielzahl von Varianten steigt.

Die Aufgabe der Erfindung besteht deshalb darin, eine neue Rolle für Apparate und Möbel zu schaffen, mit der auf kostengünstige Weise eine Vielzahl von nach den individuellen Wünschen der Kunden ausgestalteten Rollen herstellbar ist.

Die Lösung der Aufgabe ergibt sich aus den Merkmalen des Anspruches 1:
Rolle (10) für Apparate und Möbel, mit einem ein Kopfteil (12) und ein Fußteil (13) aufweisendes Tragteil (11), dessen Kopfteil (12) einen Befestigungsbolzen (17) aufnimmt und dessen Fußteil (13) eine Radachse (14) lagert, an der mindestens ein Rad (15) angeordnet ist und dass am Tragteil (11) weitgehend umlaufend eine einstückige, eine durchgehende Designfläche ausbildende Tragteilabdeckung (19) aus Kunststoff austauschbar angeordnet ist, dadurch gekennzeichnet, dass die Innenflächen der Tragteilabdeckung (19) im Bereich der Radabdeckungsbereiche (20) und der Tragteilabdeckungsbereiche (21) je zwei Rastelemente (23) aufweisen, die im montierten Zustand im Tragteil (11) verrastet werden und dass die Innenflächen der Radabdeckungsbereiche (20) jeweils mit zwei Stützbereichen (24) versehen sind, die formschlüssig nach der Befestigung der Tragteilabdeckung ins Tragteil eingreifen.

Die erfindungsgemäße Rolle hat den wesentlichen Vorteil, dass mit ihr auf sehr preiswerte Weise ein- und dieselbe Rolle durch Anbringung unterschiedlicher Tragteilabdeckungen vielfältig nach Kundenwünschen individualisiert werden kann.

In diesem Zusammenhang ist es darüber hinaus von Vorteil, dass die Rolle an sich in großen Stückzahlen und damit kostengünstig herstellbar ist und diese auf Lager liegende Rolle dann kurzfristig nach Kundenwunsch in einem gewünschten Design angeboten und geliefert werden kann, da eine Vielzahl von unterschiedlichen Tragteilabdeckungen ebenfalls verfügbar sind.

Bei einer vorteilhaften Ausführungsform der Erfindung wird die Tragteilabdeckung aus Polypropylen gebildet. Vorteilhafterweise ist dieses Material nicht nur preiswert, sondern es nimmt keine Feuchtigkeit auf und eine Vortrocknung ist nicht notwendig.

Auf bevorzugte Weise ist die Tragteilabdeckung mittels einer Mehrzahl von Rastmitteln auf das Tragteil aufrastbar. Diese Art der Befestigung ist nicht nur einfach herzustellen und zu montieren, sondern ermöglicht auch eine durchgehende Designfläche ohne sichtbare Befestigungsstellen.

Weitere Vorteile der Erfindung ergeben sich aus der nachfolgenden Beschreibung eines Ausführungsbeispiels. Es zeigen:
- Figur 1:: Seitenansicht einer Einradrolle ohne Tragteilabdeckung,
- Figur 2:: Draufsicht auf eine Tragteilabdeckung,
- Figur 3:: Innenansicht einer Tragteilabdeckung gemäß Fig. 2,
- Figur 4:: Darstellung der Einradrolle gemäß Fig. 1 mit daran angeordneter Tragteilabdeckung,
- Figur 5:: vergrößerte Teilschnittdarstellung einer Rastmittelbefestigung gemäß Schnittlinien V-V in Fig. 4,
- Figur 6:: Stirnansicht der Einradrolle gemäß Ansichtspfeil VI in Fig. 4 und
- Figur 7:: Stirnansicht der Einradrolle gemäß Ansichtspfeil VII in Fig. 4.

In den Figuren ist eine Einradrolle insgesamt mit der Bezugsziffer 10 gekennzeichnet.

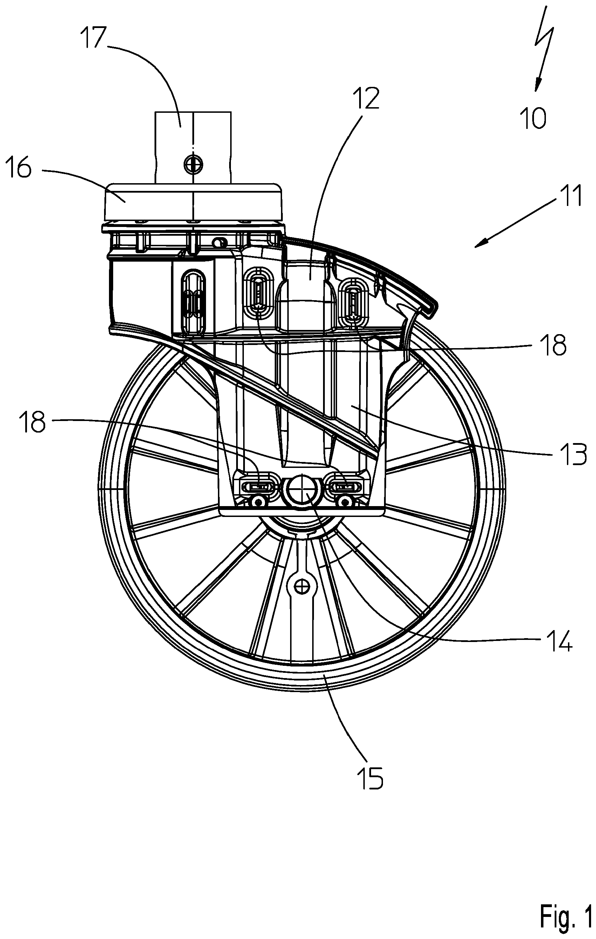

Die Fig. 1 zeigt die Einradrolle 10 in Seitenansicht. Man erkennt in dieser Darstellung ein Tragteil (Traggehäuse) 11, welches aus einem Kopfteil 12 und einem Fußteil 13 gebildet wird. Am Fußteil 13 ist mittels einer Radachse 14 ein Rad 15 drehbar angeordnet. Auf dem Kopfteil 12 ist auf nicht dargestellte Weise unter einer Lagerabdeckkappe 16 ein Drehlager angeordnet, wobei nach oben aus der Lagerabdeckkappe 16 heraus ein Befestigungsbolzen 17 zur Anordnung beispielsweise an einem Krankenbett ragt.

Letztlich sind am Tragteil 11 vier Aufnahmebereiche 18 für Rastmittel dargestellt.

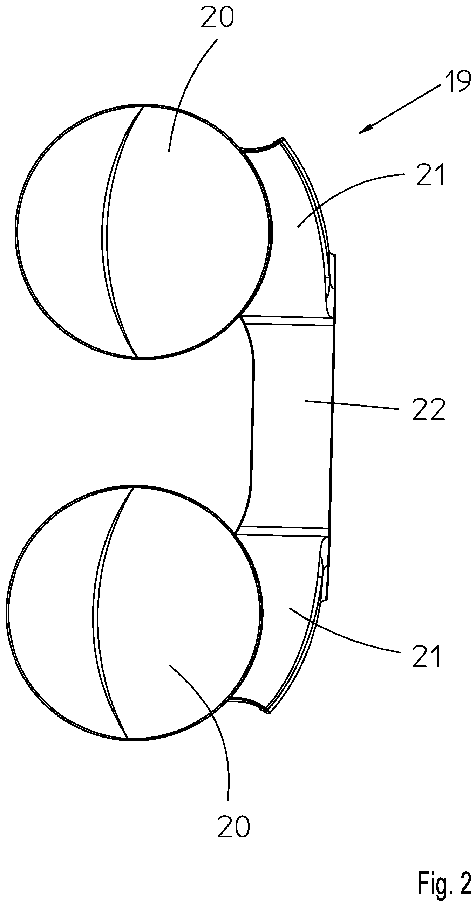

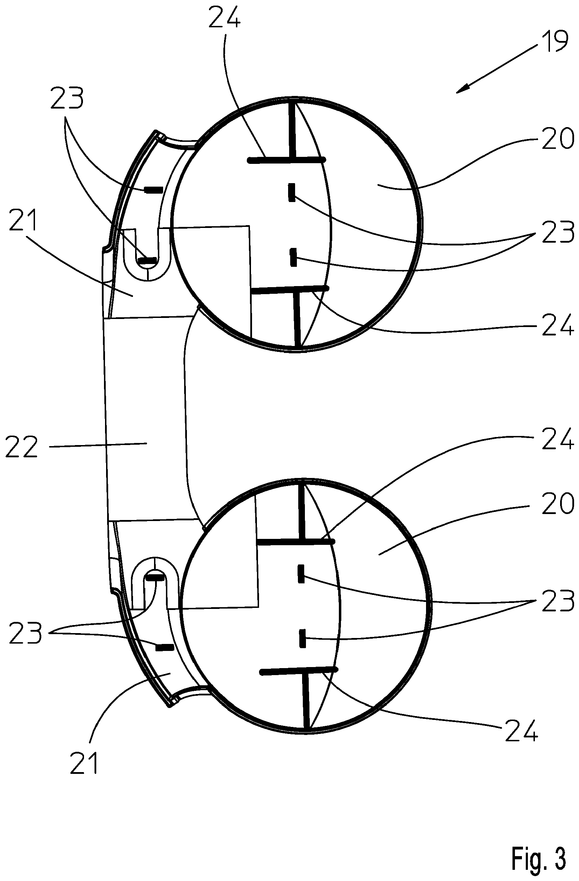

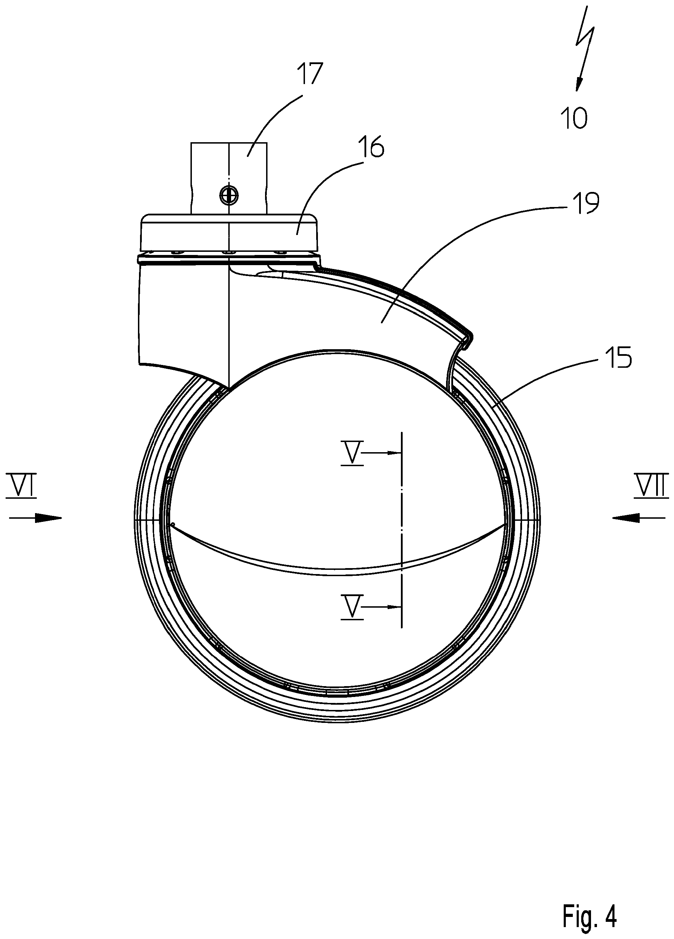

Während in der Figur 2 in ausgebreiteter Form eine Tragteilabdeckung 19 von außen dargestellt ist, zeigt die Figur 3 die Innenansicht derselben Tragteilabdeckung 19. Ergänzend ist in der Figur 4 die Einradrolle 10 mit daran angeordneter Tragteilabdeckung 19 zu erkennen.

Bei der Tragteilabdeckung 19 (s. Fig. 2) handelt es sich um ein Kunststoffteil aus vorzugsweise Polypropylen, welches zwei Radabdeckungsbereiche 20, zwei Tragteilabdeckungsbereiche 21 und ein flexibles Mittelteil 22 aufweist.

Wie aus Figur 3 ersichtlich, weisen die Innenflächen der Tragteilabdeckung 19 im Bereich der Radabdeckungsbereiche 20 und der Tragteilabdeckungsbereiche 21 je zwei Rastelemente 23 auf, die auf noch nachfolgende Weise beschriebene Art und Weise im montierten Zustand im Tragteil 11 verrastet werden. Zusätzlich sind die Innenflächen der Radabdeckungsbereiche 20 jeweils mit zwei Stützbereichen 24 versehen, die formschlüssig nach der Befestigung der Tragteilabdeckung 19 ins Tragteil 11 eingreifen. Die Stützbereiche 24 dienen dazu, eventuell auftretende Seitenkräfte am Tragteil 11 aufzufangen, damit die Rastelemente 23 unbelastet bleiben.

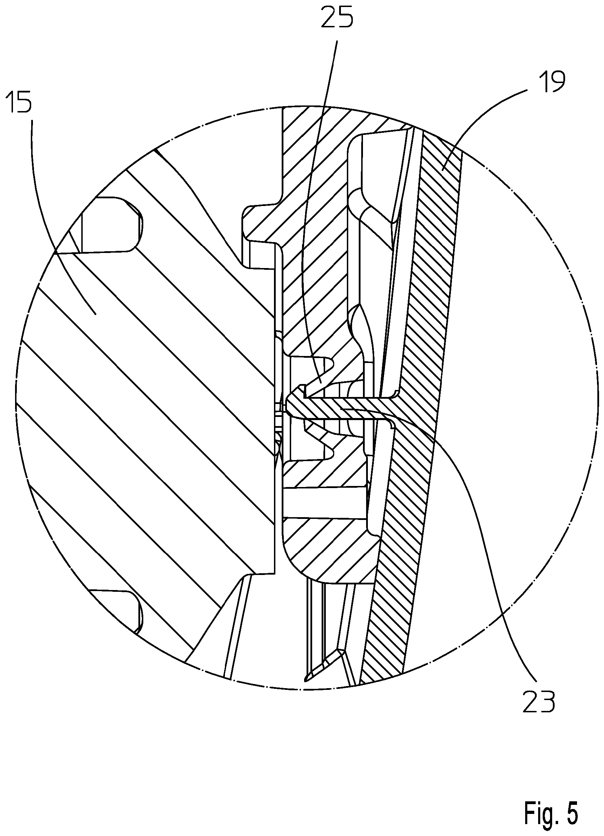

In der Figur 5 ist eine vergrößerte Teilschnittdarstellung gemäß Schnittlinie V-V in Figur 4 dargestellt. Dort erkennt man beispielhaft, dass die Tragteilabdeckung 19 mit Hilfe von einem Rastmittel 23 einen am Tragteil 11 angeformten Rastvorsprung 25 hintergreift. Durch die an jedem Radabdeckungsbereich 20 sowie an jedem Tragteildeckungsbereich 21 jeweils angeordneten zwei Rastmittel 23 wird die Tragteilabdeckung 19 zuverlässig an der Einradrolle 10 befestigt.

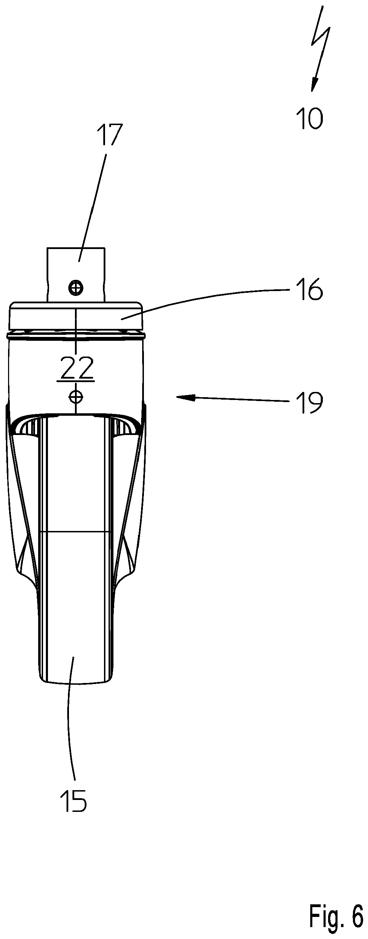

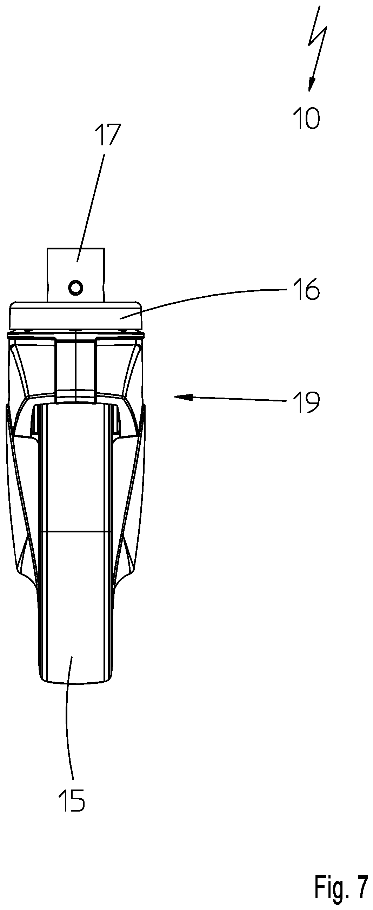

Letztlich sind in den Figuren 6 und 7 Stirnansichten der Einradrolle 10 einschließlich Tragteilabdeckung 19 gemäß Ansichtspfeilen VI und VII in Fig. 4 dargestellt.

### Bezugszeichen

- 10: Einradrolle
- 11: Tragteil
- 12: Kopfteil
- 13: Fußteil
- 14: Radachse
- 15: Rad
- 16: Lagerabdeckkappe
- 17: Befestigungsbolzen
- 18: Aufnahmebereiche für Rastmittel
- 19: Tragteilabdeckung
- 20: Radabdeckungsbereiche
- 21: Tragteilabdeckungsbereich
- 22: flexibles Mittelteil
- 23: Rastelemente
- 24: Stützbereiche
- 25: Rastvorsprung

## Patentansprüche

1. Rolle (10) für Apparate und Möbel, mit einem ein Kopfteil (12) und ein Fußteil (13) aufweisendes Tragteil (11), dessen Kopfteil (12) einen Befestigungsbolzen (17) aufnimmt und dessen Fußteil (13) eine Radachse (14) lagert, an der mindestens ein Rad (15) angeordnet ist und dass am Tragteil (11) weitgehend umlaufend eine einstückige, eine durchgehende Designfläche ausbildende Tragteilabdeckung (19) aus Kunststoff austauschbar angeordnet ist, **dadurch gekennzeichnet, dass** die Innenflächen der Tragteilabdeckung (19) im Bereich der Radabdeckungsbereiche (20) und der Tragteilabdeckungsbereiche (21) je zwei Rastelemente (23) aufweisen, die im montierten Zustand im Tragteil (11) verrastet werden und dass die Innenflächen der Radabdeckungsbereiche (20) jeweils mit zwei Stützbereichen (24) versehen sind, die formschlüssig nach der Befestigung der Tragteilabdeckung ins Tragteil eingreifen.

2. Rolle (10) nach Anspruch 1, **dadurch gekennzeichnet, dass** die Tragteilabdeckung (19) aus Polypropylen gebildet wird.

3. Rolle (10) nach Anspruch 1 oder 2, **dadurch gekennzeichnet, dass** die Tragteilabdeckung (19) mittels einer Mehrzahl von Rastmitteln (23) auf das Tragteil (11) aufrastbar ist.

## Claims

1. Roller (10) for apparatus and furniture, having a support part (11) having a head part (12) and a foot part (13), the head part (12) of which support part receives a fixing bolt (17), and the foot part (13) of which support part mounts a wheel axis (14), on which at least one wheel (15) is arranged, and a single-piece support part cover (19) forming a continuous design surface made of plastic can be exchangeably arranged extensively peripherally on the support part (11), **characterised in that** the inner surfaces of the support part cover (19) each have two latching elements (23) in the region of the wheel cover regions (20) and the support part cover regions (21), said latching elements being latched in the support part (11) in the mounted state, and the inner surfaces of the wheel cover regions (20) are each provided with two bracing regions (24), which engage in the support part in a form-fit manner after fixing the support part cover.

2. Roller (10) according to claim 1, **characterised in that** the support part cover (19) is formed from polypropylene.

3. Roller (10) according to claim 1 or 2, **characterised in that** the support part cover (19) can be latched onto the support part (11) by means of a plurality of latching means (23).

## Revendications

1. Rouleau (10) pour appareils et meubles, doté d'une partie porteuse (11) comportant une partie de tête (12) et une partie de pied (13), dont la partie de tête (12) accueille un boulon de fixation (17) et dont la partie de pied (13) loge un axe de roue (14) sur lequel au moins une roue (15) est disposée et dans lequel sur la partie porteuse (11) est disposé de façon essentiellement périphérique et de façon amovible un capot de partie porteuse (19) formé d'une pièce en matière plastique constituant une surface de design continue, **caractérisé en ce que** les faces intérieures du capot de partie porteuse (19) présentent chacune dans la région des zones de capot de roue (20) et des zones de capot de partie porteuse (21) deux éléments d'encliquetage (23) qui sont encliquetés dans la partie porteuse (11) à l'état monté et que les faces intérieures des zones de capot de roue (20) sont dotées chacune de deux zones d'appui (24) qui s'engagent mécaniquement dans la partie porteuse après la fixation du capot de partie porteuse.

2. Rouleau (10) selon la revendication 1, **caractérisé en ce que** le capot de partie porteuse (19) est formé de propylène.

3. Rouleau (10) selon la revendication 1 ou 2, **caractérisé en ce que** le capot de partie porteuse (19) peut être encliqueté au moyen d'une multitude de moyens d'encliquetage (23) sur la partie porteuse (11).
